# EUROPEAN PATENT SPECIFICATION

(11) **EP 2 152 111 B1**
(45) Date of publication and mention of the grant of the patent: **03.10.2012**
(21) Application number: 08749220.3
(22) Date of filing: 29.04.2008
(51) Int. Cl.: A43B 7/14, A43B 7/06, A43B 7/12, A43B 17/08, B29D 35/12

(54) **MEMBRANE WITH SUCTION CUPS HAVING THE SHAPE OF AN OPEN HOURGLASS MOULDED IN FLEXIBLE THERMOPLASTIC MATERIAL ONTO A HYDROPHILIC AND/OR BREATHABLE SUPPORT**
MEMBRAN MIT AUS FLEXIBLEM THERMOPLASTISCHEM MATERIAL AUF EINE HYDROPHILE UND/ODER ATMUNGSAKTIVE UNTERLAGE GEFORMTEN SAUGNÄPFEN MIT DER FORM EINER OFFENEN SANDUHR
MEMBRANE À VENTOUSES EN FORME DE SABLIERS OUVERTS MOULÉES DANS UN MATÉRIAU THERMOPLASTIQUE SOUPLE SUR UN SUPPORT HYDROPHILE ET/OU RESPIRANT

(30) Priority: 04.06.2007 IT MC20070115
(43) Date of publication of application: 17.02.2010
(73) Proprietor: EUROSUOLE S.P.A., 62012 Civitanova Marche MC (IT)
(72) Inventor: SENSINI, Andrea, I-62018 Potenza Picena (IT)
(74) Representative: Statti, Francesco
(86) International application number: PCT/EP2008/003461
(87) International publication number: WO 2008/148448

(56) References cited:
- EP-A- 0 780 063
- WO-A-01/03536
- WO-A-91/11928
- DE-C- 474 016
- US-A1- 2007 234 593

## Description

### Field of invention

The present invention concerns the footwear sector and more specifically it concerns a membrane to be fitted as an accessory in the front part or covering the entire surface of the footbed of shoe soles consisting of a support in hydrophilic or breathable and waterproof material onto which a series of suction cups having the shape of an open hourglass or of bellows or of a cylinder are directly moulded in flexible thermoplastic material fitted facing the part where the foot rests in order to provide efficacious ventilation and waterproofing of the shoe and greater comfort during walking.

### Background

One of the main goals of footwear manufacturers has always been to improve the comfort of their products for users both to facilitate walking and to eliminate the vapour generated inside the shoe due to the perspiration of the foot.

In this sense, soles equipped with an air cushion and with holes to increase comfort and the internal breathability of the shoes have been the object of numerous patents dating back as far as 1884 with US Patent No. 302,190 *"Air cushion for boot or shoe soles ",* which was followed by US Patent No. 1,044,941 of 19 November 1912; US Patent No. 1,605,588 of 02 November 1926; US Patent No. 2,030,545 of February 1936.

More recently, the problem of ventilation inside shoes has been dealt with by fitting, between the foot resting surface and the external sole, a midsole presenting a plurality of equidistant slits the purpose of which is to push the air inside the shoe downwards (US Patent No. 3,256,621 of 21 June 1966).

A similar solution was adopted also by US Patent No. 5,588,226 of 31 December 1996, *entitled "Unidirectional air transfer system for shoes ",* drilling in the footbed and in the sole a series of holes designed to facilitate the unidirectional transfer of air between the openings in the footbed and the sole.

Another solution to perspiration inside shoes is described and claimed by US Patent No. 5,044,096 of 03 September 1991 entitled *"Sole structure for footwear"* and consists of a tread sole having microholes formed therein which traverse its whole thickness and is covered by a membrane made of microporous, breathable and waterproof material, preferably Gore Tex, so as to keep the foot dry and protected from any dampness created by the sweating of the foot or from any water that might have entered through the microholes created in the tread sole.

In any case, the results achieved by the solutions adopted and patented up till the 1990s proved not to be satisfactory as they were not able to guarantee increased ventilation of the foot, nor to prevent the infiltration of water through the microholes in the tread sole.

In particular, the solution described and claimed in US Patent No. 5,044,096 presents the problem of having to use an extremely thin type of breathable membrane, thereby creating the necessity to protect the said membrane from the abrasive action of the foot during walking with foam material or with polyester felt. This protective material, having a low resistance to compression, loses its thickness through use, tending to flatten irreversibly resulting in a marked loss of comfort in the shoes.

Other materials that are more resistant to compression, e.g. polyurethanes with a high resistance to compression, present the problem of increasing the temperature inside the shoe as they are insulating materials.

In order to overcome the aforementioned problems, other technical solutions were adopted, such as that described and claimed in US Patent No. 6,209,226 of 03 April 2001 which provides for the adoption of air chambers extending through the whole thickness of the sole formed by elastic spacers and, in any case, such as to create, during walking, an exchange of air under the sole of the foot.

Another solution was adopted by Patent Application No. 10/874,213 of 24 June 2004, Publication No. US 2005/0283996 of 29 December 2005, which provided for the creation in the internal part of the sole of a cavity in which to fit a soft membrane consisting of small elastic lamellas preferably rectangular in shape facing towards the bottom of the sole so that the air cushion created in the interspace between the membrane and the concave base of the sole, due to the pressure exerted by the weight of the body on the resting foot and due to the increase in the angle of the lamellas, is expelled to the exterior through a channel realised in the internal structure of the sole and equipped with a unidirectional outlet valve.

The problem with the membrane described and claimed in Patent No. US 2005/0283996 is that the lamellas with which it is equipped tend, with use, to lose their elasticity and break, so that their cushioning effect and the internal ventilation of the foot are limited in time. A similar solution is proposed by WO 91/11928.

Another problem with the above-described solution is that the unidirectional valve may cease to function correctly over time, impeding the discharge of damp air or allowing the infiltration of water in case of rain.

### Disclosure of invention

It is an object of the present invention to resolve the problems presently called to mind by proposing a membrane, to be fitted as an accessory in the front part or covering the entire surface of the footbed of shoe soles, consisting of a support made of hydrophilic or breathable and waterproof material onto which suction cups in soft thermoplastic material are moulded at a given distance apart and provided with great flexibility and resistance to permanent deformation also thanks to their particular shape resembling an open hourglass or bellows or a cylinder facing towards the foot resting surface in order to guarantee greater comfort.

Further, it is an object of the present invention to have a membrane whose suction cups having the shape of an open hourglass or of bellows of a cylinder are moulded onto the support made of hydrophilic or breathable and waterproof material with a special type of mould that is the object of the PCT application entitled *"Mould with Intermediate Mobile Surface"* claiming the priority of Italian Patent No. 2007A000114 of 04/06/2007, under the name of Eurosuole spa.

Further, it is an object of the present invention to facilitate perspiration of the foot so that it remains dry whatever the conditions.

Further, it is an object of the present invention to create a microclimate internal to the shoe even in conditions of extreme heat, so as to be particularly suitable for sports shoes, especially for those practising tennis on cement, for race walking or marathons and similar.

These and other objects are achieved according to the invention that is the object of the present application which concerns a membrane, to be fitted as an accessory in a cavity in the front part or covering the entire surface of shoe soles, consisting of a support made of hydrophilic or breathable and waterproof material onto which suction cups in soft thermoplastic material are moulded at a given distance apart and characterised by great flexibility and resistance to permanent deformation also thanks to their particular shape resembling an open hourglass or bellows or a cylinder facing towards the foot resting surface in order to guarantee greater and more long-lasting comfort while facilitating the perspiration of the foot.

### Detailed description

Further features and advantages of the invention shall be better understood from the description of a preferred but not exclusive embodiment of the present application, illustrated by way of indicative but non-limiting example in the accompanying drawings in which:

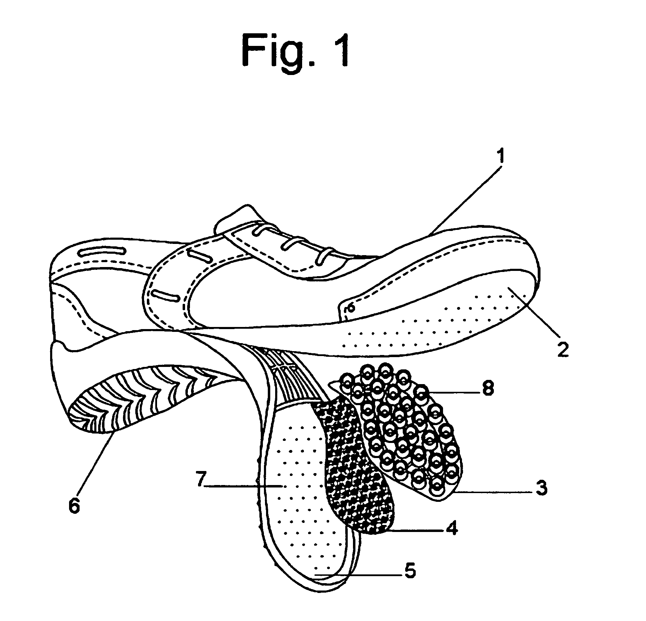

Fig.1 shows a cross-section of a shoe on which are numbered with (1) the upper, with the insole (2) covering the membrane (3) consisting of a support made of hydrophilic or breathable and waterproof material (4) onto which the suction cups having the shape of an open hourglass (8) or of bellows or of a cylinder are directly moulded with soft thermoplastic material facing towards the resting surface of the user's foot, with the cavity (5) made in the actual sole itself (6) on which a plurality of microholes (7) are located for the purpose of expelling the pressed air and where the membrane (3) is fitted.

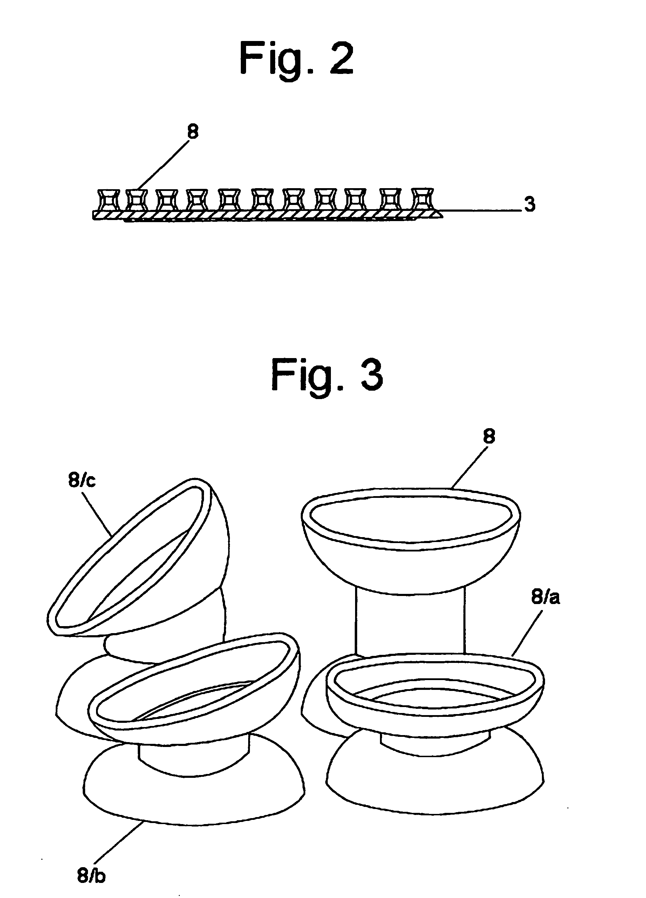

Fig. 2 presents a side view of the membrane (3) to be positioned in the cavity (5) of the sole (6) highlighting the suction cups having the shape of an open hourglass (8) facing towards the foot resting surface and moulded at a given distance apart onto a support made of hydrophilic or breathable material (4) facing towards the bottom of the cavity (5) in order to serve the dual function of allowing the discharging towards the exterior of any water vapour created inside the cavity (5) and of guaranteeing the impermeability of the inside of the shoe from any infiltration of water through the outlet microholes (7) created on the sole (6).
Fig. 3 shows a representation of the movement of the suction cups having the shape of an open hourglass (8) or bellows or a cylinder during walking and rest phases.

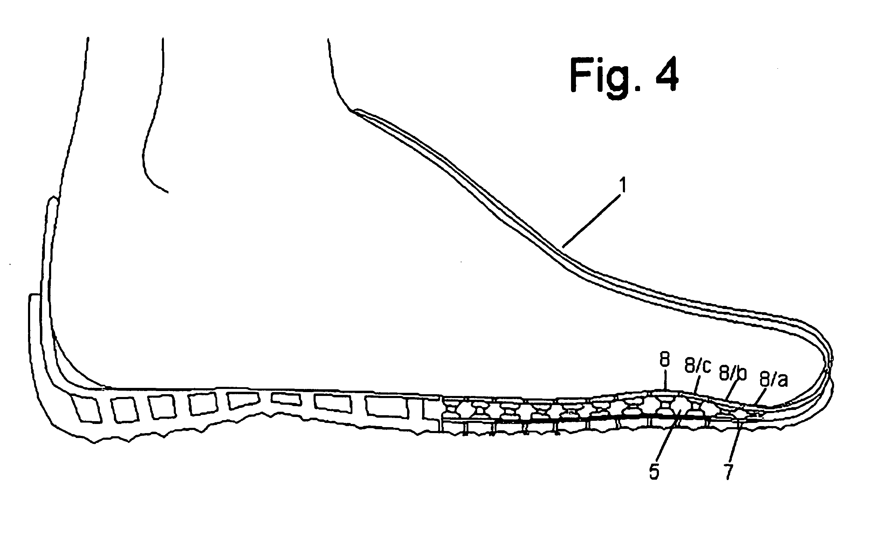

Fig. 4 shows a side cross-section demonstrating the functionality of the invention.
Fig. 5 shows a representation of the membrane (3) in the version in which it covers the entire surface of the sole (6).

The invention that is the object of the present application concerns a membrane (3) to be fitted as an accessory for shoes in a special cavity (5) prepared in the top of a sole (6) provided with microholes (7), consisting of a support made of hydrophilic or other breathable and waterproof material (4) onto which suction cups having the shape of an open hourglass (8) or of bellows or of a cylinder are moulded directly with an extremely elastic thermoplastic polymer fitted facing towards the foot resting surface in order to guarantee greater and more long-lasting comfort while facilitating the perspiration of the foot.

The particular shape of the suction cups (8) resembling an hourglass or bellows or a cylinder together with their high elasticity transmit to the foot with which they are in direct contact a gentle massage as they deflect due to the pressure of walking and suddenly return to their original position as soon as the foot rises.

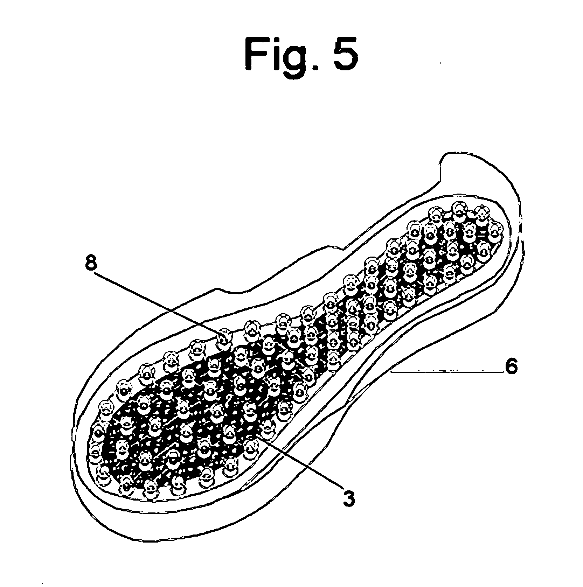

The alternative form of the present invention is shown in Fig. 5 by the membrane (3) with its suction cups in the shape of an open hourglass or of bellows or of a cylinder (8) covering the entire surface of the sole (6).

The characteristic of the membrane (3) is that it is comprised of the combination of the support made of hydrophilic or breathable and waterproof material (4) and the suction cups having the shape of an open hourglass (8) or open bellows or a cylinder moulded directly with an extremely soft thermoplastic material that makes them flexible and wear-resistant for long periods of time and soft in order to absorb the impact of the foot during walking.

Another characteristic of the suction cups having the shape of an open hourglass (8) or of open bellows or of a cylinder is that they are directly moulded onto the support made of hydrophilic or breathable material (4) at a given distance apart so as to leave a part of the support surface (4) free in order to facilitate perspiration.

The functionality of the aforementioned suction cups having the shape of an open hourglass (8) or of open bellows or of a cylinder is demonstrated in Fig. 3 which depicts the hourglass shape of the suction cup in the rest position (8), the hourglass shape of the suction cup when the foot is pressing down on it and hence at maximum vertical pressure (8/a), the oblique pressure of the suction cup at the start of the foot resting phase (8/b), the suction cup at the maximum horizontal pressure received from the foot during the walking phase (8/c).

Obviously the functionality of the suction cups (8), (8a), (8b) and (8c) as described in Fig. 3 remains unvaried if shaped resembling open bellows or a cylinder.

The above-described movements (8), (8a), (8b) and (8c) of the membrane's (3) suction cups having the shape of an open hourglass or of open bellows or of a cylinder, in addition to guaranteeing total absorption of the impact of the foot against the ground also thanks to their position facing it, generate downward pressure of the air enclosed in the cavity (5) forcing it to discharge from the unidirectional microholes (7) drilled in the sole (6) in which it is facilitated by the support made of hydrophilic or breathable (4) material of the membrane (3) which, being also waterproof, serves to prevent the formation of humidity inside the shoe preventing the infiltration of water from the outside through the aforementioned microholes (7).

Perspiration is moreover facilitated by the fact that the suction cups having the particular shape of an open hourglass (8) or bellows or a cylinder are moulded onto the support made of hydrophilic or breathable material (4) at a given distance apart so as to leave a greater surface free in order to facilitate the perspiration of the foot.

Finally it is important to specify that the realisation of the invention as described above involved a special study of the mould for which the PCT application entitled *"Mould with Intermediate Mobile Surface ",* claiming the priority of Italian Patent No. 2007A000114 of 04/06/2007, under the name of Eurosuole spa.

The materials and the dimensions of the above-described invention, illustrated in the accompanying drawings and later claimed, may be varied according to requirements.

## Claims

1. Membrane (3) with suction cups to be fitted as an accessory in the front part or covering the entire surface of the footbed of shoe soles in order to provide efficacious ventilation and waterproofing of the foot as well as improved comfort during walking **characterised by** a support made of hydrophilic material or other breathable and waterproof material (4) onto which a series of suction cups (8) having the shape of an open hourglass or of bellows or of a cylinder are directly moulded facing towards the foot resting surface so as to ensure greater and more long-lasting comfort while facilitating the perspiration of the foot.

2. Membrane with suction cups as claimed in claim 1 **characterised by** the fact that the suction cups (8) preferably having the shape of an open hourglass or of bellows or of a cylinder are facing towards the foot resting surface so as to increase the impact absorption effect during walking.

3. Membrane with suction cups as claimed in claims 1 and 2 **characterised by** the fact that their particular shape resembling an open hourglass or bellows or a cylinder together with their high elasticity transmit to the foot with which they are in direct contact a gentle massage as they deflect due to the wearer's weight during walking and suddenly return to their original position as soon as the foot rises.

4. Membrane with suction cups as claimed in claims 1, 2, 3 **characterised by** the fact that the suction cups (8) having the shape of an open hourglass or of bellows or of a cylinder are moulded in flexible thermoplastic material directly onto the support (4) made of hydrophilic, breathable and 5 waterproof material at a given distance apart.

5. Membrane with suction cups as claimed in claim 4 **characterised by** the fact that the distance of the suction cups is determined in such a way as to leave a larger part of the support surface made of hydrophilic, breathable and waterproof material free in order to facilitate perspiration of the foot.

## Patentansprüche

1. Membran (3) mit Saugnäpfen als Zubehör an der Vorderseite oder zur Abdeckung der gesamten Fläche der Schuhsohle für eine effiziente Belüftung und Wasserschutz des Fußes sowie mehr Komfort beim Gehen, **gekennzeichnet durch** eine Unterlage aus einem hydrophilen oder einem anderen atmungsaktiven und wasserfesten Material (4), auf das eine Reihe an Saugnäpfen (8) in Form einer offenen Sanduhr oder eines Balgs oder Zylinders direkt mit Blick zur Fußsohlenfläche vergossen werden, sodass ein besserer und länger anhaltender Komfort gewährleistet und die Atmung des Fußes sichergestellt ist.

2. Membran mit Saugnäpfen nach Patentanspruch 1, **dadurch gekennzeichnet, dass** die Saugnäpfe (8) vorzugsweise die Form einer offenen Sanduhr oder eines Balgs oder Zylinders aufweisen und zur Fußsohlenfläche zeigen, sodass die Stoßabfederung beim Gehen gesteigert wird.

3. Membran mit Saugnäpfen nach Patentansprüchen 1 und 2, **dadurch gekennzeichnet, dass** ihre besondere Form einer offenen Sanduhr oder eines Balgs oder Zylinders zusammen mit der hohen Elastizität den Fuß, mit dem sie in unmittelbarem Kontakt stehen, sanft massieren, wenn sie sich aufgrund des Körpergewichts des Trägers beim Gehen beugen und wieder in ihre ursprüngliche Position zurückkehren, sobald sich der Fuß vom Boden hebt.

4. Membran mit Saugnäpfen nach Patentansprüchen 1, 2 und 3, **dadurch gekennzeichnet, dass** die Saugnäpfe (8) in Form einer offenen Sanduhr oder eines Balgs oder Zylinders aus flexiblem thermoplastischen Material direkt mit der Unterlage (4) aus hydrophilem, atmungsaktivem und wasserfestem Material in einem bestimmten Abstand vergossen sind.

5. Membran mit Saugnäpfen nach Patentanspruch 4, **dadurch gekennzeichnet, dass** der Abstand der Saugnäpfe so festgelegt ist, dass ein größerer Teil der Unterlage aus hydrophilem, atmungsaktivem und wasserfestem Material frei ist, um die Atmung des Fußes zu ermöglichen.

## Revendications

1. Membrane (3) à ventouses à monter comme accessoire à l'avant ou recouvrant l'intégralité de la surface de la semelle renforcée de la chaussure pour offrir une ventilation efficace et imperméable du pied, ainsi qu'un confort amélioré pendant la marche. Elle se distingue par un support constitué d'un matériau hydrophile ou d'un autre matériau respirant et imperméable (4) sur lequel une série de ventouses (8) en forme de sabliers ouverts, de soufflets ou de cylindre sont directement moulées vers la surface d'appui du pied pour garantir un confort supérieur et plus durable, tout en favorisant la transpiration du pied.

2. Membrane à ventouses comme revendiqué dans la revendication 1 qui se distingue par le fait que les ventouses (8), ayant de préférence la forme d'un sablier ouvert, d'un soufflet ou d'un cylindre, sont tournées vers la surface d'appui du pied pour augmenter l'effet d'absorption des chocs pendant la marche.

3. Membrane à ventouses, comme revendiqué dans les revendications 1 et 2, qui se distinguent par le fait que leur forme particulière, similaire à celle d'un sablier ouvert, d'un soufflet ou d'un cylindre, alliée à leur haute élasticité, transmet au pied avec lequel elles sont en contact direct un massage doux lorsqu'elles se plient sous le poids de la personne pendant la marche puis se remettent aussitôt dans leur position d'origine dès que le pied se lève.

4. Membrane à ventouses, comme revendiqué dans les revendications 1, 2, 3 qui se distingue par le fait que les ventouses (8), ayant la forme d'un sablier ouvert, d'un soufflet ou d'un cylindre, sont moulées dans un matériau thermoplastique souple à une certaine distance directement sur le support (4) constitué de matériau hydrophile, respirant et imperméable.

5. Membrane à ventouses, comme revendiqué dans la revendication 4, **caractérisée par le fait que** la distance des ventouses est étudiée de manière à ce qu'une plus grande partie de la surface de support, constituée de matériau hydrophile, respirant et imperméable, reste libre afin de faciliter la transpiration du pied.
